(19) Europäisches Patentamt / European Patent Office / Office européen des brevets

(11) **EP 3 433 473 B1**

(12) **EUROPEAN PATENT SPECIFICATION**

(45) Date of publication and mention
of the grant of the patent:
**05.05.2021 Bulletin 2021/18**

(21) Application number: **17769498.1**

(22) Date of filing: **23.03.2017**

(51) Int Cl.:
*F01M 1/08* (2006.01)     *F16N 39/04* (2006.01)

(86) International application number:
**PCT/DK2017/050087**

(87) International publication number:
**WO 2017/162253 (28.09.2017 Gazette 2017/39)**

(54) **METHOD AND SYSTEM FOR DOSING LUBRICATING OIL INTO CYLINDERS, PREFERABLY IN TWO-STROKE DIESEL ENGINES, AND USE OF SUCH METHOD AND SYSTEM**

VERFAHREN UND SYSTEM ZUR DOSIERUNG VON SCHMIERÖL IN ZYLINDERN, VORZUGSWEISE IN ZWEITAKT-DIESELMOTOREN, SOWIE VERWENDUNG SOLCH EINES VERFAHRENS UND SYSTEMS

PROCÉDÉ ET SYSTÈME DE DOSAGE D'HUILE DE LUBRIFICATION DANS DES CYLINDRES, DE PRÉFÉRENCE DANS DES MOTEURS DIESEL À DEUX TEMPS, ET UTILISATION D'UN TEL PROCÉDÉ ET D'UN TEL SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.03.2016 DK 201670169**

(43) Date of publication of application:
**30.01.2019 Bulletin 2019/05**

(73) Proprietor: **Hans Jensen Lubricators A/S**
**9560 Hadsund (DK)**

(72) Inventor: **RAVENDRAN, Rathesan**
**9000 Aalborg (DK)**

(74) Representative: **Patrade A/S**
**Ceresbyen 75**
**8000 Aarhus C (DK)**

(56) References cited:
| | |
|---|---|
| EP-A1- 2 484 875 | EP-A1- 2 484 875 |
| EP-A2- 0 049 603 | EP-A2- 1 426 571 |
| WO-A2-2012/126473 | CN-A- 104 110 288 |
| JP-A- S59 145 312 | JP-A- 2010 236 377 |
| JP-A- 2013 204 456 | US-A1- 2006 112 925 |

## Description

### Field of the Invention

The present invention concerns a method for dosing lubricating oil into cylinders, preferably in two-stroke diesel engines, for example marine engines, the method including steps of:

- delivering lubricating oil under pressure from a lubricating oil reservoir via a forced lubrication system to injectors provided in walls of the cylinders, as a number of injectors are used, each adapted for injecting a dosed amount of lubricating oil into each cylinder;
- establishing data indicating temperature of the lubricating oil in the injector;
- storing the temperature data in a computer;
- establishing at least one temperature regulating unit controlled by the computer and connected with the delivered lubricating oil for establishing a temperature regulation of the lubricating oil before injection into the cylinder; and
- controlling the temperature regulation of the lubricating oil in dependence of the temperature of the lubricating oil in the injector.

The invention further includes a system for dosing lubricating oil into cylinders, preferably in two-stroke diesel engines, for example marine engines, the system including:

- a lubricating oil reservoir;
- a forced lubrication system connected with the lubricating oil reservoir;
- injectors that are connected with the forced lubrication system and provided in walls of the cylinders, as a number of injectors, each adapted for injecting a dosed amount of lubricating oil into each cylinder, are used, as the lubricating oil is delivered under pressure from the forced lubricating system to injectors;
- measuring units for establishing data indicating temperature of the lubricating oil in the injector;
- a computer for storing the temperature data;
- at least one temperature regulating unit controlled by the computer and connected with the delivered lubricating oil for establishing a temperature regulation of the lubricating oil before injection into the cylinder for influencing the viscosity of the lubricating oil such that a uniform injection is established.

The invention furthermore concerns using the method or the system in a forced lubrication system wherein injectors are connected to a common oil supply line having constant supply pressure.

### Background of the Invention

In traditional cylinder lubricating systems, mainly for large two-stroke diesel engines, there is used central forced lubrication systems that may include one or more lubricating apparatuses, each providing lubrication at points in a single or a plurality of cylinders, i.e. by feeding portions of oil under pressure through respective connecting lines to the various points to be lubricated at relevant time intervals. See for example EP 0 678 152. These relevant intervals can typically be when the piston rings are positioned opposite the relevant point of lubrication during the compression stroke when the piston is moving upwards.

The lubricating apparatuses are traditionally designed as pumping units which are mounted in close association with respective cylinders and which are connected with a feeding reservoir for lubricating oil and with lubricating points in the form of oil injectors at different points on the cylinder wall. Each pump unit includes a plurality of reciprocating pumps that feed various lubricating points with oil and which are driven by a common rotating control shaft with cams provided thereon. By the rotation of the shaft, the cams with pressing heads act on respective axially displacing pistons which are spring-biased in direction towards the control shaft so that the pistons by the rotation of the shaft will perform reciprocating movements for activating the pistons of the reciprocating pumps.

For many years, lubricating apparatuses have operated under the condition that the discharge pressure from the piston pumps was not to be very high, as it is a fixed standard that the oil is to be injected into the cylinder during the upwards return stroke of the engine piston, i.e. during the compressing action, however before the subsequent power stroke by the ignited combustion. It has hereby been necessary to operate with injection or pump pressures of the magnitude up to 10 bar.

A forced lubrication system can also be provided as a lubricating system for a number of cylinders. Each cylinder is equipped with a number of injectors connected to a common lubricating oil supply line having a constant supply pressure, e.g. in the magnitude of 30 - 100 bar. The supply pressure is provided by a hydraulic pump unit which is supplied from a lubricating oil reservoir. The pump station may include pumps, filters, and check valves that prevent the lubricating oil from running back through a still-standing pump.

In recent years it has been proposed to increase the efficiency of the lubrication by injecting the oil through pressurised atomising nozzles for achieving spray lubrication during the upwards movement of the piston. However, hereby the oil is applied at a far higher pressure for ensuring desired atomisation through atomising nozzles, e.g. a pressure up to 100 bar or more.

Such two-stroke marine diesel engines using SIP injectors for cylinder lubrication are known, made by Hans Jensen Lubricators.

The lubricating oil is sprayed into the scavenging air of the engine, whereby the oil is distributed in a thin and even layer on the cylinder wall. In contrast to other lubricating oil injectors on the market, the SIP injectors have the advantage of achieving a more optimal coverage of the top of the cylinder wall where the need for cylinder lubrication is the greatest.

For traditional injection systems, the injection pattern is controlled to a great extent by the design of the injection nozzle, inertia of the liquid and the properties of the liquid.

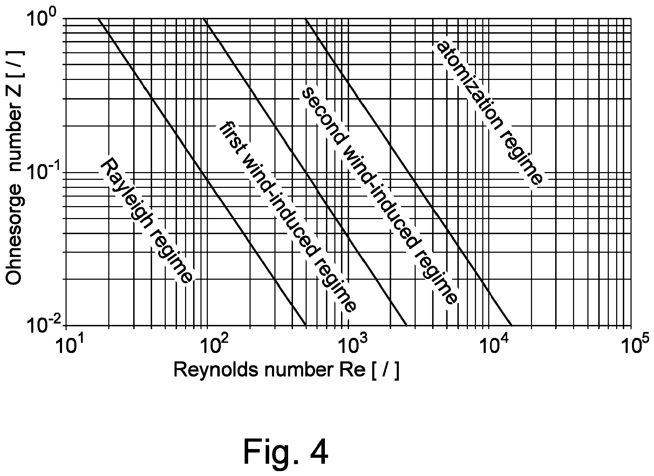

The Ohnesorge diagram shown in Fig. 4 visualizes the experimental correlation between these factors expressed by means of Reynolds number (Re) and the Ohnesorge number (Z).

$$Re = \frac{u \cdot D \cdot \rho}{\mu} \quad (1)$$

$$Z = \frac{\mu}{\sqrt{\sigma \cdot \rho \cdot D}} \quad (2)$$

wherein $u$. is the speed of the liquid, $D$ is the size of the nozzle aperture, P is the density of the liquid, $\mu$ is the viscosity of the liquid, and $\sigma$ is the surface tension of the liquid.

There are two mechanical ways by which the injection pattern of the SIP valve can be changed, either by changing the design of the nozzle or by changing the delivery pressure of the cylinder oil.

The delivery pressure is adjusted by changing the characteristic of the spring in the SIP valve. When these parameters have been established, it is no longer possible to change the injection pattern without manual interference.

Surface tension, density and viscosity are largely the identical for commercial cylinder oils. However, the viscosity is, as opposed to surface tension and density, particularly dependent on the temperature of the oil.

The viscosity of a wide range of commercial cylinder oils have been measured empirically, and it has been determined that the viscosity can be described by means of Arrhenius' equation, i.e. as a function of the temperature (T) by means of equation 3.

$$\mu(T) = 0.0061 \cdot e^{1246/8.314 \cdot T} \quad (3)$$

This equation shows that the viscosity of the cylinder oil decreases exponentially by rising temperature. The temperature of the cylinder oil, cf. the Ohnesorge diagram, will therefore have a significant impact on the injection pattern.

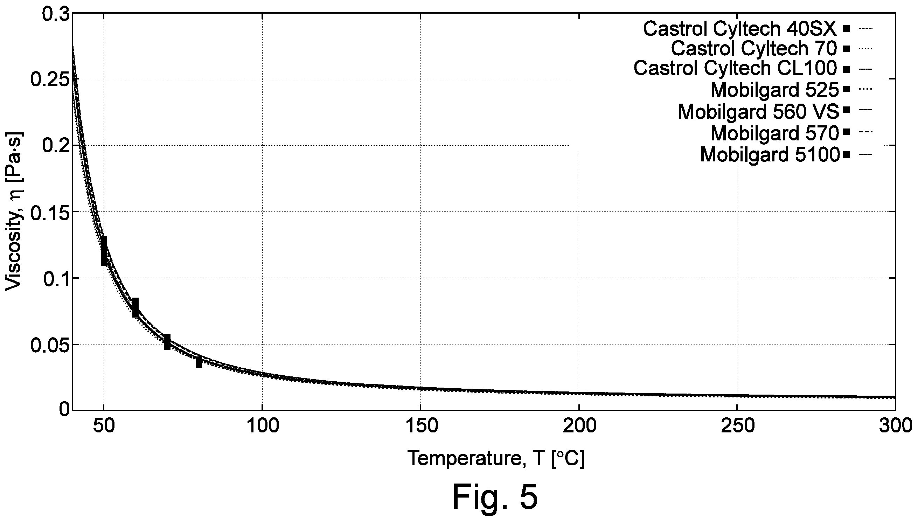

Fig. 5 shows the effect of the temperature on the viscosity for a variety of lubricating oils. There is a dramatic drop in viscosity in the interval between 40 and 300°C. By temperatures above 100°C, it appears that the curve levels off and that the temperature change only causes very limited change in the viscosity.

Compared with the two previous methods by which the injection pattern can be changed, temperature control will be a much more flexible solution.

In Sigurdsson, E. et al., 2014, "Numerical analysis of the scavenge flow and convective heat transfer in large two-stroke marine diesel engines", Applied Energy, 123, pp. 37-46, it is mentioned that the cylinder lining temperature at the cylinder head is about 250°C and that at scavenging ports at the bottom of the cylinder lining there is about 50°C. The temperature decreases from cylinder head to scavenging ports following a quadratic polynomial.

The injectors in the cylinder wall will have the same temperature as the point on the linings where the injector is positioned.

Therefore, there is a great variation in the temperature of the injectors and thereby also in the temperature of the lubricating oil injected by the injectors. These temperature deviations influence the viscosity of the lubricating oil and thereby the established injection pattern.

EP 2 484 875 A1 discloses a system and a method of the type mentioned in the introduction. This document does not describe registration of temperature data for the oil in the lubricating oil reservoir.

There is a desire for controlling the injection pattern in order to ensure uniform and correct lubrication while using the least possible amount of lubricating oil.

**Object of the Invention**

It is the object of the present invention to indicate a method and a system that may avoid the drawbacks of uneven and varying temperature of the injected lubricating oil and thereby provide a uniform injection.

**Description of the Invention**

This is achieved according to the present invention by a method of the kind mentioned in the introduction, which is peculiar in that the method further includes steps of:

- establishing data that indicate the temperature of the lubricating oil in the lubricating oil reservoir;
- establishing data indicating temperature of the cylinder lining or of the injector, or a combination thereof in situations where it is not possible to measure the lubricating oil temperature directly in the lubricating oil flowing through the injector;
- storing the temperature data in the computer;
- controlling the temperature regulation of the lubricating oil in dependence of the temperature of the cylinder lining or of the injector, or a combination thereof in situations where it is not possible to measure the lubricating oil temperature directly in the lubricating oil flowing through the injector, and the temperature of the lubricating oil in the lubricating oil reservoir;

- controlling heating/cooling by the at least one temperature regulating unit controlled by the computer based on the established data indicating the temperature of the lubricating oil in the lubricating oil reservoir and the established data indicating temperature of the lubricating oil in the injector or the established data of the temperature of the cylinder lining or of the injector, or a combination thereof in situations where it is not possible to measure the lubricating oil temperature directly in the lubricating oil flowing through the injector for influencing the viscosity of the lubricating oil such that a uniform injection is established.

The system according to the invention is peculiar in that it further includes:

- measuring units for establishing data that indicate the temperature of the cylinder lining or of the injector, or a combination thereof which data are to be used in situations where it is not possible to measure the lubricating oil temperature directly in the lubricating oil flowing through the injector; and- measuring units for establishing data that indicate the temperature of the lubricating oil in the lubricating oil reservoir.

The data indicating temperature of the cylinder lining or of the injector or a combination thereof are used as expression of the temperature of the injected lubricating oil. This is used in situations where it is not possible to measure the lubricating oil temperature directly at the injection through the injector. Alternatively, the lubricating oil temperature can be measured directly in the lubricating oil flowing through the injector. Alternatively, a combination of these temperature measurements can be used.

By regulating the temperature of the lubricating oil in the injectors it is possible to regulate the viscosity of the oil in a simple way. Thus, by controlling the temperature is possible to produce a uniform injection.

It is important to note that this does not comprise a complete atomisation only. By the invention it will be possible to control the degree of atomisation by the temperature control. Low viscosity will result in low degree of atomisation, and high viscosity will result in high degree of atomisation.

By controlling the temperature, compensation can be made for uneven and varying temperature of the lubricating oil by performing a temperature regulation, thereby influencing the viscosity of the lubricating oil and thereby providing uniform injection by each lubricating oil delivery.

In the present description is used the expression 'injection' as a term for the way in which the lubricating oil is fed into the cylinder. This can be effected by applying greater or lesser pressure such that the lubricating oil appears as an atomised spray or as a completely or partially compact jet. Also, the feeding can be effected in such a way that the oil almost can be said to flow into the cylinder instead for saying it being sprayed into the cylinder.

A use of a method according to the invention or a system according to the invention in a forced lubrication system wherein injectors are connected to a common oil supply line having constant supply pressure provides special advantages.

An advantage is further achieved in forced lubrication systems wherein the supply pressure is provided by a pump unit which is supplied with lubricating oil from a lubricating oil reservoir. Since viscosity is a term expressing the inner friction of the liquid, a change in temperature will provide that it will be possible in a simple way to perform regulation of the lubricating oil amount delivered by the forced lubrication system within a given time interval wherein injectors are connected to a common oil supply line having constant supply pressure.

Higher temperature of the injected lubricating oil will thus result in a lower viscosity. This means that less friction appears in the lubricating oil, and therefore a larger amount of lubricating oil can be injected within a given time interval.

In forced lubrication systems in which the injection time is controlled, it is therefore possible to apply the invention for regulating the amount of lubricating oil injected within the given time interval.

According to a further embodiment, the method according to the invention is peculiar in that the method further includes steps of:

- establishing an algorithm or a table in the computer for correlation between temperature and viscosity of the lubricating oil.

By providing an algorithm in the computer, control can be performed based on a formula and actually measured values.

Alternatively, the regulation can also be effected by predetermined empirical correlation numbers laid out in a table. In both situations, based on algorithm or table there may be performed adjustment of the temperature such that a desired viscosity of the lubricating oil is attained, ensuring that a uniform injection pattern is achieved independently of temperature variations in the cylinder lining and in the injectors.

According to a further embodiment, the method according to the invention is peculiar by measurement of the temperature of the lubricating oil in the injector, of the cylinder lining or of the injector is performed by temperature gauges in the area where the injectors are provided in the cylinder walls or by temperature gauges incorporated in the injectors.

By performing direct measurement of the temperature of the cylinder lining at the injectors or of the injectors themselves, an indirect measurement of the temperature of the injected lubricating oil is achieved. If the temperature incorporated in the injectors measures the lubricating oil temperature directly, a measurement of the temperature existing in the injected lubricating oil is achieved. Compensation can then be provided by heating or cooling the lubricating oil.

According to a further embodiment, the method according to the invention is peculiar by detecting the operating conditions of the engine, for example load on the engine, and using such data as an indication of the temperature of the lubricating oil.

In some cases it may be expedient to use operational parameters, as e.g. engine load, for control. The operational conditions of the engine will influence temperature conditions in the cylinder wall. Alternatively, operational conditions like load may be used in a control for adjusting other parameters than the lubricating oil temperature. A parameter for the load on the engine may also be used for adjusting distribution of the lubricating oil over the height of the cylinder wall. Also, it is possible to use temperature condition together with other operational parameters, like e.g. the cylinder temperature or the exhaust gas temperature.

According to a further embodiment, the method according to the invention is peculiar in that

- temperature regulation is performed before passage of the lubricating oil through the injector as the temperature regulating unit is arranged in series with the injector; or
- temperature regulation is performed during passage of the lubricating oil through the injector as the temperature regulating unit is incorporated in the injector.

In some cases it is preferred to provide the temperature regulation unit in series with the injector. This may e.g. be necessary in order to save space. In other situations it is preferred that the temperature regulation unit is incorporated in the injector. Hereby is achieved the most precise temperature regulation in the lubricating oil immediately before being injected by the injector.

According to a further embodiment, the method according to the invention is peculiar in that the method further includes steps of:

- detecting the actual temperature of the lubricating oil by means of temperature gauges in the lubricating oil reservoir.

By detecting the lubricating oil temperature in the lubricating oil reservoir there may be performed regulation of the lubricating oil, not only in the injectors, but also in the lubricating oil reservoir. The oil in the lubricating oil reservoir can thus be imparted a temperature which is as close to the desired lubricating oil temperature in the injector as possible. The need for heating/cooling in the temperature regulating unit provided in association with the injector is hereby reduced. This is provided by a temperature regulation unit placed in association with the lubricating oil reservoir. Such a temperature regulating unit at the lubricating oil reservoir can thus be used in combination with the temperature regulating units at the injectors.

According to a further embodiment, the method according to the invention is peculiar by

- heating/cooling in the temperature regulating unit is performed by circulating liquid, preferably water, which is in heat exchange connection with the lubricating oil; and that
- the speed of the liquid circulation is regulated in order thereby to influence the temperature regulation.

In most large engines there is provided a cooling liquid system. Therefore it will be particularly expedient if heating/cooling is performed by heat exchange between circulating cooling liquid and the lubricating oil. It is possible to perform regulation in a simple way by regulating the speed of the water circulation.

As alternative to heating/cooling by water, other liquids can be applied as well as gas or electricity can be used in the temperature regulating unit.

According to a further embodiment, the method according to the invention is peculiar in that the temperature regulation of the lubricating oil is performed within a temperature range between 0 and 250°C, preferably between 0 and 100°C.

As mentioned above, the temperature of the cylinder lining can vary between about 50 and 250°C. A temperature range of 0 - 250 °C will therefore be a suitable range for temperature regulation. As it further appears that in the temperature range 100 - 250 °C there is no great difference in the viscosity, it may be advantageous in some cases to perform regulation only in the temperature range 0 - 100 °C. In such a situation it will be assumed that the viscosity at temperatures above 100°C is comparable to the viscosity at 100°C.

The temperature of the lubricating oil can be regulated by a unit heating the oil before it passes through the injector or a unit incorporated in the injector.

According to a further embodiment, the system according to the invention is peculiar in that

- the temperature regulating unit is provided in series with the injector such that the temperature regulation is performed before passage of the lubricating oil through the injector; or
- the temperature regulating unit is incorporated in the injector such that the temperature regulation is performed during passage of the lubricating oil through the injector.

As mentioned above in connection with the method, space considerations can make it expedient to arrange the temperature regulation in series with the injector or incorporated in the injector.

According to a further embodiment, the system according to the invention is peculiar by including temperature gauges in the area in which the injectors are provided in the cylinder walls for measuring the temperature of the cylinder lining in this area, or temperature gauges incorporated in the injectors.

A temperature gauge can simply be located in the wall of the cylinder or be incorporated in the injector. By measuring the temperature of the cylinder lining at the injector or the temperature of the injector or by measuring the temperature of the lubricating oil in the injector, a very precise indication of the temperature of the injected lubricating oil is thus achieved such that temperature regulation can be performed and uniform injection established thereby.

According to a further embodiment, the system according to the invention is peculiar by including a heat exchanger unit wherein liquid, preferably water, is circulated in heat exchanging connection with the lubricating oil in order thereby to establish heating/cooling in the temperature regulating unit.

As mentioned above, a heat exchange unit in which is used circulating water is expedient in connection with large two-stroke engines as the latter are often provided with a cooling water system.

The described systems are only examples of a system according to the invention. The system can thus be constructed in other ways, as for example with injectors in the form of injection nozzles including a nozzle rod with a displaceable valve body provided therein such that valve is disposed in immediate vicinity of the nozzle aperture.

For actual operation, additional elements are required. Only the elements that are essential for explaining the invention are mentioned.

The injector can either be provided with an atomiser valve or a valve with one or more j ets/compact jets.

The injector can be made in an embodiment only supplied with pressurised lubricating oil and without return lines. Typical supply pressures are between 30 and 100 bar.

**Description of the Drawing**

The invention will be explained in more detail below with reference to the accompanying drawing, where:

Fig. 1 illustrates an embodiment of a prior art system;
Fig. 2 shows a first embodiment of a system according to the invention;
Fig. 3 shows a second embodiment of a system according to the invention;
Fig. 4 shows an Ohnesorge diagram visualizing the experimental correlation between Reynolds number (Re) and Ohnesorge number (Z); and
Fig. 5 shows the correlation between temperature and viscosity for various lubricating oils.

**Detailed Description of Embodiments of the Invention**

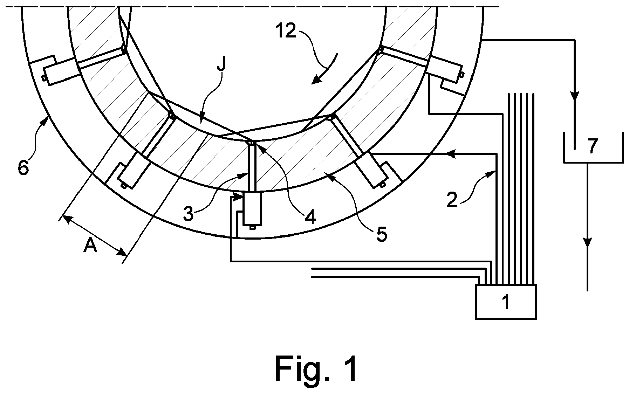

In Figs. 1, 2 and 3 are shown a number of injectors 3 disposed at suitable intervals in a cylinder lining 5. These injectors are provided for opening at a certain pressure in an oil line 2 running from a lubricating apparatus 1 to the individual injectors 3.

At the end of the injector 3, immediately within the inner cylinder face, there is mounted a nozzle 4 with nozzle apertures through which the oil is atomised when the pressure in the oil line 2 reaches a pre-set value. Alternatively, the oil can be injected without atomisation.

The oil is supplied to each oil line 2 from the lubricating apparatus 1 consisting of a number of small pumps, one for each oil line 2, receiving oil from an oil reservoir 7.

The oil pumps are capable of delivering a measured portion of oil at given time intervals and may e.g. be a traditional timed cylinder lubricating apparatus as disclosed in International patent application WO 96/09492. These injectors 3 are designed such that if an oil leak occurs, a return line 6 for leaked oil leading back to the oil reservoir 7 is provided. The injectors can be adapted for mechanical or electronic determination of the injection time.

J indicates a flow of oil injection from injector 3, and A indicates the peripheral extension of the area of the cylinder wall against which this jet is directed.

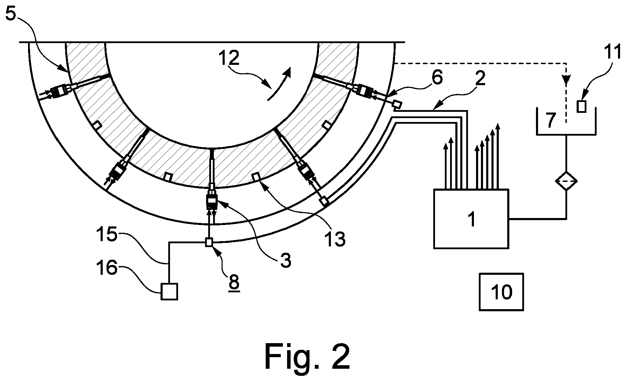

Fig. 2 shows a first embodiment of a system corresponding to the one shown in Fig. 1 and where a temperature regulating unit 8 is coupled to the oil supply for the injectors 3.

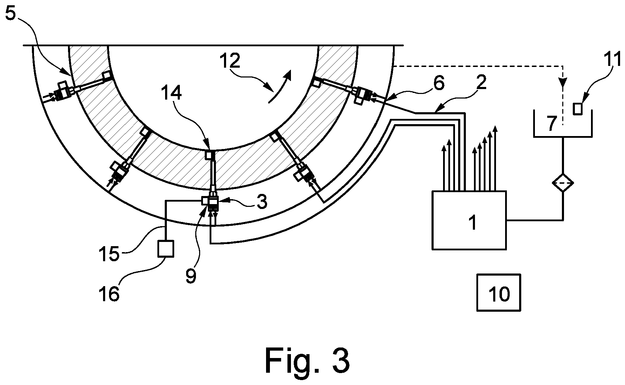

Fig. 3 shows a second embodiment of a system corresponding to the one shown in Fig. 1 and where a temperature regulating unit 9 is incorporated in the injectors 3.

The lubricating oil is sprayed into the scavenging air of the engine that forms a swirl 12, whereby the oil is distributed in a thin and even layer at the inner side of the cylinder wall 5.

It is also possible to spray lubricating oil onto the piston or under the piston where no scavenging air is present. This may be done as an alternative to or in combination with injection above the piston.

One or more temperature gauges 13 (only one is shown) are mounted in the cylinder wall 5 in the area of the injectors 3. Temperature gauges 14 (only shown in Fig. 3) are incorporated in the injectors. The temperature gauge 14 can measure the temperature of the injector or the temperature of the lubricating oil injected through the injector, or a combination of these temperatures.

These temperature gauges 13, 14 are connected to a computer 10, either via wiring (wires not shown) or via wireless communication.

A temperature gauge 11 is provided in the oil reservoir 7 and connected to a computer 10, either via wiring (wires not shown) or via wireless communication.

The computer 10 is connected with the temperature regulating unit 8/9, either via wiring (wires not shown) or via wireless communication.

The temperature regulating unit 8/9 is connected with a heating/cooling element 16 via a wire 15 such that heating/cooling in the temperature regulating unit 8/9 is established by an electric or a medium heat exchanging connection.

**Claims**

1. A method for dosing lubricating oil into cylinders, preferably in two-stroke diesel engines, for example marine engines, the method including steps of:

   - delivering lubricating oil under pressure from a lubricating oil reservoir (7) via a forced lubrication system to injectors (3) provided in walls of the cylinders, as a number of injectors are used, each adapted for injecting a dosed amount of lubricating oil into each cylinder;
   - establishing data indicating temperature of the lubricating oil in the injector;
   - storing the temperature data in a computer (10);
   - establishing at least one temperature regulating unit (8, 9) controlled by the computer and which is in connection with the delivered lubricating oil for establishing a temperature regulation of the lubricating oil before injection into the cylinder; and
   - controlling the temperature regulation of the lubricating oil in dependence of the temperature of the lubricating oil in the injector;

   **characterised in that** the method further includes steps of:

   - establishing data indicating the temperature of the lubricating oil in the lubricating oil reservoir (7);
   - establishing data indicating temperature of the cylinder lining (5) or of the injector (3), or a combination thereof in situations where it is not possible to measure the lubricating oil temperature directly in the lubricating oil flowing through the injector (3);
   - storing the temperature data in the computer;
   - controlling or regulating the temperature of the lubricating oil in dependence of the temperature data established of the cylinder lining or of the injector, or a combination thereof in situations where it is not possible to measure the lubricating oil temperature directly in the lubricating oil flowing through the injector, and the temperature of the lubricating oil in the lubricating oil reservoir (7);
   - controlling heating/cooling by the at least one temperature regulating unit (8, 9) controlled by the computer based on the established data indicating the temperature of the lubricating oil in the lubricating oil reservoir and the established data indicating temperature of the lubricating oil in the injector or the established data of the temperature of the cylinder lining or of the injector, or a combination thereof in situations where it is not possible to measure the lubricating oil temperature directly in the lubricating oil flowing through the injector for influencing the viscosity of the lubricating oil such that a uniform injection is established.

2. Method according to claim 1, **characterised in that** the method further includes steps of:

   - establishing an algorithm or a table in the computer for correlation between temperature and viscosity of the lubricating oil.

3. Method according to claim 1 or 2, **characterised by**

   - measurement of the temperature of the lubricating oil in the injector, of the cylinder lining or of the injector is performed by temperature gauges (13) in the area where the injectors are provided in the cylinder walls or by temperature gauges (14) incorporated in the injectors.

4. Method according to claim 1 or 2, **characterised by**

   - detecting the operating conditions of the engine, for example load on the engine, and using such data as an indication of the temperature of the lubricating oil.

5. Method according to any preceding claim, **characterised in that**

   - temperature regulation is performed before passage of the lubricating oil through the injector as the temperature regulating unit is arranged in series with the injector; or
   - temperature regulation is performed during passage of the lubricating oil through the injector as the temperature regulating unit is incorporated in the injector.

6. Method according to any preceding claim, **characterised in that** the method further includes steps of:

- detecting the actual temperature of the lubricating oil by means of temperature gauges (11) in the lubricating oil reservoir.

7. Method according to any preceding claim, **characterised in that**

- heating/cooling in the temperature regulating unit is performed by circulating liquid, preferably water, which is in heat exchange connection with the lubricating oil; and that
- the speed of the liquid circulation is regulated in order thereby to influence the temperature regulation.

8. Method according to any preceding claim, **characterised in that**

- the temperature regulation of the lubricating oil is performed within a temperature range between 0 and 250°C, preferably between 0 and 100°C.

9. A system for dosing lubricating oil into cylinders, preferably in two-stroke diesel engines, for example marine engines, the system including:

- a lubricating oil reservoir (7);
- a forced lubrication system connected with the lubricating oil reservoir (7);
- injectors (3) that are connected with the forced lubrication system and provided in walls of the cylinders, as a number of injectors, each adapted for injecting a dosed amount of lubricating oil into each cylinder, are used, as the lubricating oil is delivered under pressure from the forced lubricating system to injectors (3);
- measuring units for establishing data indicating temperature of the lubricating oil in the injector (3);
- a computer (10) for storing the temperature data;
- at least one temperature regulating unit (8, 9) controlled by the computer and connected with the delivered lubricating oil for establishing a temperature regulation of the lubricating oil before injection into the cylinder for influencing the viscosity of the lubricating oil such that a uniform injection is established, **characterised in that** that the system furthermore includes:
- measuring units for establishing data that indicate the temperature of the cylinder lining (5) or of the injector (3), or a combination thereof which data are to be used in situations where it is not possible to measure the lubricating oil temperature directly in the lubricating oil flowing through the injector (3); and
- measuring units for establishing data that indicate the temperature of the lubricating oil in the lubricating oil reservoir (7).

10. System according to claim 9, **characterised in that**

- the temperature regulating unit (8, 9) is provided in series with the injector such that the temperature regulation is performed before passage of the lubricating oil through the injector; or
- the temperature regulating unit is incorporated in the injector such that the temperature regulation is performed during passage of the lubricating oil through the injector.

11. System according to claim 9 or 10, **characterised in that** it includes temperature gauges (13) in the area in which the injectors are provided in the cylinder walls for measuring the temperature of the cylinder lining (5) in this area, or temperature gauge (14) incorporated in the in injectors (3).

12. System according to claim 9, 10 or 11, **characterised in that** it includes a heat exchanger unit wherein liquid, preferably water, is circulated in heat exchanging connection with the lubricating oil in order thereby to establish heating/cooling in the temperature regulating unit.

13. Use of a method according to any of claims 1 - 8 or a system according to any of claims 9 - 12 in a forced lubrication system wherein injectors are connected to a common oil supply line having a constant supply pressure.

**Patentansprüche**

1. Verfahren zum Dosieren von Schmieröl in Zylinder, vorzugsweise in Zweitakt-Dieselmotoren, zum Beispiel Schiffsmotoren, wobei das Verfahren die folgenden Schritte beinhaltet:

- Abgeben von Schmieröl unter Druck von einem Schmierölbehälter (7) über ein Druckschmierungssystem an Einspritzvorrichtungen (3), die in Wänden des Zylinders bereitgestellt sind, wenn eine Anzahl von Einspritzvorrichtungen verwendet wird, von der jede zum Einspritzen einer dosierten Menge von Schmieröl in jeden Zylinder ausgelegt ist;
- Erstellen von Daten, die eine Temperatur des Schmieröls in der Einspritzvorrichtung angeben;
- Speichern der Temperaturdaten in einem Computer (10);
- Einrichten mindestens einer Temperaturregelungseinheit (8, 9), die durch den Computer gesteuert wird und die in Verbindung mit dem abgegebenen Schmieröl steht, um eine Temperaturregulierung des Schmieröls vor dem Einspritzen in den Zylinder zu erreichen; und
- Steuern der Temperaturregulierung des Schmieröls in Abhängigkeit von der Temperatur des Schmieröls in der Einspritzvorrichtung;

**dadurch gekennzeichnet, dass** das Verfahren ferner die folgenden Schritte beinhaltet:

- Erstellen von Daten, die die Temperatur des Schmieröls in dem Schmierölbehälter (7) angeben;
- Erstellen von Daten, die eine Temperatur der Zylinderbuchse (5) oder der Einspritzvorrichtung (3) oder einer Kombination davon in Situationen, in denen es nicht möglich ist, die Schmieröltemperatur direkt in dem Schmieröl zu messen, das durch die Einspritzvorrichtung (3) strömt, angeben;
- Speichern der Temperaturdaten in dem Computer;
- Steuern oder Regulieren der Temperatur des Schmieröls in Abhängigkeit der erstellten Temperaturdaten der Zylinderbuchse oder der Einspritzvorrichtung oder einer Kombination davon in Situationen, in denen es nicht möglich ist, die Schmieröltemperatur direkt in dem Schmieröl zu messen, das durch die Einspritzvorrichtung strömt, und der Temperatur des Schmieröls in dem Schmierölbehälter(7);
- Steuern des Erwärmens/Kühlens durch die mindestens eine Temperaturregulierungseinheit (8, 9), die durch den Computer basierend auf den erstellten Daten, die die Temperatur des Schmieröls in dem Schmierölbehälter angeben, und den erstellten Daten, die die Temperatur des Schmieröls in der Einspritzvorrichtung angeben, oder den erstellten Daten der Temperatur der Zylinderbuchse oder der Einspritzvorrichtung oder einer Kombination davon in Situationen, in denen es nicht möglich ist, die Schmieröltemperatur direkt in dem Schmieröl zu messen, das durch die Einspritzvorrichtung strömt, gesteuert wird, um die Viskosität des Schmieröls so zu beeinflussen, dass eine gleichmäßige Einspritzung erreicht wird.

2. Verfahren nach Anspruch 1, **dadurch gekennzeichnet, dass** das Verfahren ferner die folgenden Schritte beinhaltet:

- Erstellen eines Algorithmus oder einer Tabelle in dem Computer zur Korrelation zwischen Temperatur und Viskosität des Schmieröls.

3. Verfahren nach Anspruch 1 oder 2, **dadurch gekennzeichnet, dass**

- eine Messung der Temperatur des Schmieröls in der Einspritzvorrichtung, der Zylinderbuchse oder der Einspritzvorrichtung durch Temperaturmesser (13) in dem Bereich, in dem die Einspritzvorrichtungen in den Zylinderwänden bereitgestellt sind, oder durch Temperaturmesser (14), die in den Einspritzvorrichtungen eingebaut sind, durchgeführt wird.

4. Verfahren nach Anspruch 1 oder 2, **gekennzeichnet durch**

- Erkennen der Betriebsbedingungen des Motors, zum Beispiel der Motorlast, und Verwenden dieser Daten als einen Hinweis auf die Temperatur des Schmieröls.

5. Verfahren nach einem der vorstehenden Ansprüche, **dadurch gekennzeichnet, dass**

- eine Temperaturregulierung vor dem Durchlaufen des Schmieröls durch dir Einspritzvorrichtung durchgeführt wird, wenn die Temperaturregulierungseinheit in Reihe mit der Einspritzvorrichtung angeordnet ist, oder
- eine Temperaturregulierung während des Durchlaufens des Schmieröls durch dir Einspritzvorrichtung durchgeführt wird, wenn die Temperaturregulierungseinheit in der Einspritzvorrichtung eingebaut ist.

6. Verfahren nach einem der vorstehenden Ansprüche, **dadurch gekennzeichnet, dass** das Verfahren ferner die folgenden Schritte umfasst:

- Erkennen der tatsächlichen Temperatur des Schmieröls mittels Temperaturmesser (11) in dem Schmierölbehälter.

7. Verfahren nach einem der vorstehenden Ansprüche, **dadurch gekennzeichnet, dass**

- ein Erwärmen/Kühlen in der Temperaturregulierungseinheit durch das Zirkulierenlassen von Flüssigkeit, vorzugsweise Wasser, durchgeführt wird, das in einer Wärmeaustauschverbindung mit dem Schmieröl steht; und dass
- die Geschwindigkeit der Flüssigkeitszirkulation reguliert wird, damit dadurch die Temperaturregulierung beeinflusst wird.

8. Verfahren nach einem der vorstehenden Ansprüche, **dadurch gekennzeichnet, dass**

- die Temperaturregulierung des Schmieröls innerhalb eines Temperaturbereichs zwischen 0 und 250 °C, vorzugsweise zwischen 0 und 100 °C durchgeführt wird.

9. System zum Dosieren von Schmieröl in Zylinder, vorzugsweise in Zweitakt-Dieselmotoren, zum Beispiel Schiffsmotoren, wobei das System Folgendes umfasst:

   - einen Schmierölbehälter (7);
   - ein Druckschmierungssystem, das mit dem Schmierölbehälter (7) verbunden ist;
   - Einspritzvorrichtungen (3), die mit dem Druckschmierungssystem verbunden sind und in Wänden der Zylinder bereitgestellt sind, wenn eine Anzahl von Einspritzvorrichtungen, die jeweils zum Einspritzen einer dosierten Menge von Schmieröl in jeden Zylinder ausgelegt sind, verwendet wird, wenn das Schmieröl unter Druck von dem Druckschmierungssystem an Einspritzvorrichtungen (3) abgegeben wird;
   - Messeinheiten zum Erstellen von Daten, die die Temperatur des Schmieröls in der Einspritzvorrichtung (3) angeben;
   - einen Computer (10) zum Speichern der Temperaturdaten;
   - mindestens eine Temperaturregulierungseinheit (8, 9), die durch den Computer gesteuert wird und mit dem abgegebenen Schmieröl verbunden ist, um eine Temperaturregulierung des Schmieröls vor Injektion in den Zylinder zu erstellen, um die Viskosität des Schmieröls so zu beeinflussen, dass eine gleichmäßige Einspritzung erstellt wird, **dadurch gekennzeichnet, dass** das System ferner Folgendes beinhaltet:
   - Messeinheiten zum Erstellen von Daten, die die Temperatur der Zylinderbuchse (5) oder der Einspritzvorrichtung (3) oder einer Kombination davon angeben, wobei diese Daten in Situationen zu verwenden sind, in denen es nicht möglich ist, die Schmieröltemperatur direkt in dem Schmieröl zu messen, das durch die Einspritzvorrichtung (3) strömt; und
   - Messeinheiten zum Erstellen von Daten, die die Temperatur des Schmieröls in dem Schmierölbehälter (7) angeben.

10. System nach Anspruch 9, **dadurch gekennzeichnet, dass**

    - die Temperaturregulierungseinheit (8, 9) in Reihe mit der Einspritzvorrichtung bereitgestellt ist, so dass die Temperaturregulierung vor dem Durchlaufen des Schmieröls durch die Einspritzvorrichtung durchgeführt wird; oder
    - die Temperaturregulierungseinheit in der Einspritzvorrichtung eingebaut ist, so dass die Temperaturregulierung während des Durchlaufens des Schmieröls durch die Einspritzvorrichtung durchgeführt wird.

11. System nach Anspruch 9 oder 10, **dadurch gekennzeichnet, dass** es Temperaturmesser (13) in dem Bereich, in dem die Einspritzvorrichtungen in den Zylinderwänden bereitgestellt sind, zum Messen der Temperatur der Zylinderbuchse (5) in diesem Bereich oder einen Temperaturmesser (14) umfasst, der in den Einspritzvorrichtungen (3) eingebaut ist.

12. System nach Anspruch 9, 10 oder 11, **dadurch gekennzeichnet, dass** es eine Wärmetauschereinheit beinhaltet, in der eine Flüssigkeit, vorzugsweise Wasser, in einer Wärmeaustauschverbindung mit dem Schmieröl zirkuliert, um dadurch eine Erwärmung/Kühlung in der Temperaturregulierungseinheit herzustellen.

13. Verwendung eines Verfahrens nach einem der Ansprüche 1 - 8 oder eines Systems nach einem der Ansprüche 9 - 12 in einem Druckschmierungssystem, in dem Einspritzvorrichtungen mit einer gemeinsamen Ölversorgungsleitung, die einen konstanten Versorgungsdruck aufweist, verbunden sind.

**Revendications**

1. Procédé de dosage d'huile de lubrification dans des cylindres, de préférence dans des moteurs diesel à deux temps, par exemple des moteurs marins, le procédé comportant les étapes consistant à :

   - délivrer de l'huile de lubrification sous pression provenant d'un réservoir d'huile de lubrification (7) via un système de lubrification forcée à des injecteurs (3) prévus dans des parois des cylindres, quand un nombre d'injecteurs sont utilisés, chacun adapté pour injecter une quantité dosée d'huile de lubrification dans chaque cylindre ;
   - établir des données indiquant une température de l'huile de lubrification dans l'injecteur ;
   - stocker les données de température dans un ordinateur (10) ;
   - établir au moins une unité de régulation de température (8, 9) commandée par l'ordinateur et qui est raccordée à l'huile de lubrification délivrée pour établir une régulation de température de l'huile de lubrification avant une injection dans le cylindre ; et
   - commander la régulation de température de l'huile de lubrification en fonction de la température de l'huile de lubrification dans l'injecteur ;

   **caractérisé en ce que** le procédé comporte en outre les étapes consistant à :

   - établir des données indiquant la température de l'huile de lubrification dans le réservoir d'huile de lubrification (7) ;

- établir des données indiquant une température du revêtement de cylindre (5) ou de l'injecteur (3), ou une combinaison de celles-ci dans des situations où il n'est pas possible de mesurer la température d'huile de lubrification directement dans l'huile de lubrification s'écoulant à travers l'injecteur (3) ;

- stocker les données de température dans l'ordinateur ;

- commander ou réguler la température de l'huile de lubrification en fonction des données de température établies du revêtement de cylindre ou de l'injecteur, ou d'une combinaison de celles-ci dans des situations où il n'est pas possible de mesurer la température d'huile de lubrification directement dans l'huile de lubrification s'écoulant à travers l'injecteur, ni la température de l'huile de lubrification dans le réservoir d'huile de lubrification (7) ;

- commander un chauffage/refroidissement par l'au moins une unité de régulation de température (8, 9) commandée par l'ordinateur sur la base des données établies indiquant la température de l'huile de lubrification dans le réservoir d'huile de lubrification et des données établies indiquant une température de l'huile de lubrification dans l'injecteur ou des données établies de la température du revêtement de cylindre ou de l'injecteur, ou d'une combinaison de celles-ci dans des situations où il n'est pas possible de mesurer la température d'huile de lubrification directement dans l'huile de lubrification s'écoulant à travers l'injecteur pour influer sur la viscosité de l'huile de lubrification de sorte qu'une injection uniforme soit établie.

2. Procédé selon la revendication 1, **caractérisé en ce que** le procédé comporte en outre les étapes consistant à :

- établir un algorithme ou une table dans l'ordinateur pour une corrélation entre une température et une viscosité de l'huile de lubrification.

3. Procédé selon la revendication 1 ou 2, **caractérisé par**

- la mesure de la température de l'huile de lubrification dans l'injecteur, du revêtement de cylindre ou de l'injecteur est effectuée par des jauges de température (13) dans la zone où les injecteurs sont prévus dans les parois de cylindres ou par des jauges de température (14) incorporées dans les injecteurs.

4. Procédé selon la revendication 1 ou 2, **caractérisé par**

- la détection des conditions de fonctionnement du moteur, par exemple une charge sur le moteur, et l'utilisation de ces données en tant qu'indication de la température de l'huile de lubrification.

5. Procédé selon une quelconque revendication précédente, **caractérisé en ce que**

- la régulation de température est effectuée avant un passage de l'huile de lubrification à travers l'injecteur quand l'unité de régulation de température est agencée en série avec l'injecteur ; ou

- la régulation de température est effectuée durant un passage de l'huile de lubrification à travers l'injecteur quand l'unité de régulation de température est incorporée dans l'injecteur.

6. Procédé selon une quelconque revendication précédente, **caractérisé en ce que** le procédé comporte en outre les étapes consistant à :

- détecter la température réelle de l'huile de lubrification au moyen de jauges de température (11) dans le réservoir d'huile de lubrification.

7. Procédé selon une quelconque revendication précédente, **caractérisé en ce que**

- le chauffage/refroidissement dans l'unité de régulation de température est effectué en mettant en circulation un liquide, de préférence de l'eau, qui est en raccordement d'échange de chaleur avec l'huile de lubrification ; et **en ce que**

- la vitesse de la circulation de liquide est régulée afin d'influer ainsi sur la régulation de température.

8. Procédé selon une quelconque revendication précédente, **caractérisé en ce que**

- la régulation de température de l'huile de lubrification est effectuée dans une plage de températures entre 0 et 250 °C, de préférence entre 0 et 100 °C.

9. Système de dosage d'huile de lubrification dans des cylindres, de préférence dans des moteurs diesel à deux temps, par exemple des moteurs marins, le système comportant :

- un réservoir d'huile de lubrification (7) ;

- un système de lubrification forcée raccordé au réservoir d'huile de lubrification (7) ;

- des injecteurs (3) qui sont raccordés au système de lubrification forcée et prévus dans des parois des cylindres, quand un nombre d'injecteurs, chacun adapté pour injecter une quantité dosée d'huile de lubrification dans chaque cylindre, sont utilisés, quand l'huile de lubrification est délivrée sous pression à partir du système de lubrification forcée à des injecteurs (3) ;
- des unités de mesure pour établir des données indiquant une température de l'huile de lubrification dans l'injecteur (3) ;
- un ordinateur (10) pour stocker les données de température ;
- au moins une unité de régulation de température (8, 9) commandée par l'ordinateur et raccordée à l'huile de lubrification délivrée pour établir une régulation de température de l'huile de lubrification avant une injection dans le cylindre pour influer sur la viscosité de l'huile de lubrification de sorte qu'une injection uniforme soit établie,

**caractérisé en ce que** le système comporte de plus :

- des unités de mesure pour établir des données qui indiquent la température du revêtement de cylindre (5) ou de l'injecteur (3) ou une combinaison de celles-ci, lesquelles données doivent être utilisées dans des situations où il n'est pas possible de mesurer la température d'huile de lubrification directement dans l'huile de lubrification s'écoulant à travers l'injecteur (3) ; et
- des unités de mesure pour établir des données qui indiquent la température de l'huile de lubrification dans le réservoir d'huile de lubrification (7).

10. Système selon la revendication 9, **caractérisé en ce que**

- l'unité de régulation de température (8, 9) est prévue en série avec l'injecteur de sorte que la régulation de température soit effectuée avant un passage de l'huile de lubrification à travers l'injecteur ; ou
- l'unité de régulation de température est incorporée dans l'injecteur de sorte que la régulation de température soit effectuée durant un passage de l'huile de lubrification à travers l'injecteur.

11. Système selon la revendication 9 ou 10, **caractérisé en ce qu'**il comporte des jauges de température (13) dans la zone dans laquelle les injecteurs sont prévus dans les parois de cylindres pour mesurer la température du revêtement de cylindre (5) dans cette zone, ou une jauge de température (14) incorporée dans les injecteurs (3).

12. Système selon la revendication 9, 10 ou 11, **caractérisé en ce qu'**il comporte une unité d'échange de chaleur dans laquelle un liquide, de préférence de l'eau, est mise en circulation en raccordement d'échange de chaleur avec l'huile de lubrification afin d'établir ainsi un chauffage/refroidissement dans l'unité de régulation de température.

13. Utilisation d'un procédé selon l'une quelconque des revendications 1 à 8 ou d'un système selon l'une quelconque des revendications 9 à 12 dans un système de lubrification forcée dans lequel des injecteurs sont raccordés à une ligne d'alimentation en huile commune ayant une pression d'alimentation constante.

Fig. 1

Fig. 2

Fig. 3

Fig. 4

Fig. 5

EP 3 433 473 B1

**EP 3 433 473 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0678152 A
- EP 2484875 A1

- WO 9609492 A

**Non-patent literature cited in the description**

- **SIGURDSSON, E. et al.** Numerical analysis of the scavenge flow and convective heat transfer in large two-stroke marine diesel engines. *Applied Energy,* 2014, vol. 123, 37-46